# EUROPEAN PATENT SPECIFICATION

(11) **EP 1 404 056 B1**
(45) Date of publication and mention of the grant of the patent: **21.03.2012**
(21) Application number: 03018338.8
(22) Date of filing: 12.08.2003
(51) Int. Cl.: H04W 12/06, H04L 29/06, H04L 12/14, H04L 12/28

(54) **Systems and apparatus for automatic internet access account generation**
Einrichtungen und Vorrichtungen zur automatischen Generierung von Internetzugangskonten
Système et appareils pour la génération automatique de comptes d'accès d'internet

(30) Priority: 29.09.2002 CN 02255191; 26.02.2003 CN 03204640
(43) Date of publication of application: 31.03.2004
(73) Proprietor: Handlink Technologies Inc., Hsinchu, Taiwan 300 (TW)
(72) Inventor: Lin, Por-Horng, Hsinchu, Taiwan 300 (TW); Hsu, Ying-Tsai, Hsinchu, Taiwan 300 (TW)
(74) Representative: Weber, Joachim

(56) References cited:
- EP-A- 1 191 763
- US-A1- 2001 032 878
- US-A1- 2001 054 101
- US-A1- 2002 046 341
- US-A1- 2002 116 217
- HANNIKAINEN M ET AL: "Trends in personal wireless data communications" COMPUTER COMMUNICATIONS, ELSEVIER SCIENCE PUBLISHERS BV, AMSTERDAM, NL, vol. 25, no. 1, 1 January 2002 (2002-01-01), pages 84-99, XP004321158 ISSN: 0140-3664

## Description

### BACKGROUND OF THE INVENTION

### 1. Field of the Invention

The present invention relates to an automatic account generation system and printer therefor, and more particularly, to a computer network system that can automatically print Internet user access authentication information and enable new users to connect to the Wireless Area Network (WAN) from any place by just entering their Internet user access authentication information.

### 2. Background of the Related Art

Wireless network technology is becoming widely used, and many enterprises and public buildings, such as international airports, hotels and coffee shops are implementing the technology to provide wireless Internet services to consumers. Users only need to use their own notebook computers or PDAs (Personal Digital Assistants), and rent the wireless network interface card or subscribe to the service to connect to the wireless network. They can then access the Internet world for e-mail, on-line games, personal financial information, news, etc. Thus, network resources can be accessed at any time and from any place.

US 2001/0054101 A1 discloses a server and method to provide access to a network by a computer configured for a different network. In particular, users are required to register with a system using a browser application before internet connectivity is established. Then, the system transparently translates the settings of the client machine into addresses appropriate to the hotel's network environment while routing data to the internet. In addition, the server "reverse translates" return network traffic to use addresses compatible to the client computer's configuration. Unauthorized use of the network is blocked until a client registers. The system maintains a list of those client computers that have been registered and are authorized to use the network. Traffic from authorized clients is routed while other traffic is discarded or redirected. Access codes are generated for each room on a daily basis and clients must enter the access code for the room as a part of the registration process. Rooms are identified either manually be a associating an access code with a particularly room or automatically by obtaining the switch port the client is connected to and deriving the associated room. The system provides facilities to automatically generate a new access code for each room, either for the current day or the next day. The codes are displayed by a web page and can be printed.

US 2002/0116217 A1 discloses a sales data processing system, a portable electronic terminal and a home delivery receiving method. It is disclosed that a point of sale terminal comprises a thermal printer that is connected to a bus line wire a printer controller and is driven and controlled by a microcomputer. The thermal printer displays a function as a receipt printer, by printing out necessary items for a receipt on a long piece of receipt paper, cutting and discharging the receipt from the receipt aperture.

However, wireless Internet access services are mostly provided by specific Internet service suppliers in such manner that a full package includes hardware and software. Login accounts, passwords and user's configuration data for Internet access are also available for sale at the counters of shops or cybercafes where users frequent. Hence, the outlets offering wireless Internet access services have to share their gains with the Internet service suppliers. In this way, they cannot completely profit from the wireless Internet access services they provide inside their outlets. If small-scale shops install similar wireless area network on their own and maintain the related Internet access services, then these lead to a lot of technological and operating obstacles. In other words, most of the shops do not have enough budget to hire special employees that possess the knowledge and skills in Internet technology required for the maintenance and administration of a wireless Internet access service. Moreover, they are unable to manage the complicated data involved with Internet access and calculate fees according to the on-line time for the wireless Internet access service for users who may go to the shops at any time.

In summary, it is important for Internet service enterprises nowadays to provide a system that can effectively manage wireless Internet access services and increase the competitiveness of Internet access service shops or cybercafes.

### SUMMARY OF THE INVENTION

A first objective of the present invention is to provide an automatic account generation system and printer therefor so as to simplify operations regarding Internet services. The automatic account generation system automatically acquires and prints Internet user access authentication information via a printer so that users can access the Internet after the Internet user access authentication information is entered into a computer terminal.

The second objective of the present invention is to provide an automatic account generation system and its printer, both designed to save manpower, so that it can automatically retrieve Internet user access authentication information without the employment of specific people to monitor the utilization of the wireless Internet access services. Therefore, the wireless Internet access service supplier can efficiently operate their Internet services at a lower cost.

The third objective of the present invention is to provide an automatic account generation system that can act on its own so as to enable small-scale shops to maintain and operate the system independently, without being subject to other Internet service suppliers or having to share profits with them.

The fourth objective of the present invention is to provide an automatic account generation system characterized by such diversified fee collection functions that payment may be made by cash or by credit card.

In order to achieve the objectives, the present invention discloses an automatic account generation system according to claim 1. The dependent claims define preferred embodiments thereof. Therefore, the automatic account generation system includes an account generator having an IP address and exhibiting an account management function, a printer and at least one apparatus capable of providing wireless Internet access. Internet user access authentication information can be acquired and printed from the account generator via the touch panel of the input device of the printer. When a user can enter the Internet user access authentication information into a wireless access apparatus, such as a notebook or a PDA equipped with a WLAN (Wireless Local Area Network) card, he or she can automatically access the WLAN wherever he or she is located. Moreover, the present system is equipped with a payment apparatus that can be connected to the account generator, so that it can accept payment made, whether by cash or by credit card, for getting the Internet user access authentication information.

### BRIEF DESCRIPTION OF THE DRAWINGS

The invention will be described according to the appended drawings in which:
FIG. 1 is a schematic diagram of an automatic account generation system in accordance with the first embodiment of the present invention;
FIG. 2 is a schematic diagram of an automatic account generation system in accordance with the second embodiment of the present invention;
FIG. 3 is a perspective diagram of the printer in accordance with the present invention;
FIG. 4 is a schematic diagram of an automatic account generation system in accordance with the third embodiment of the present invention; and
FIG. 5 is a schematic diagram of an automatic account generation system in accordance with the fourth embodiment of the present invention.

### PREFERRED EMBODIMENT OF THE PRESENT INVENTION

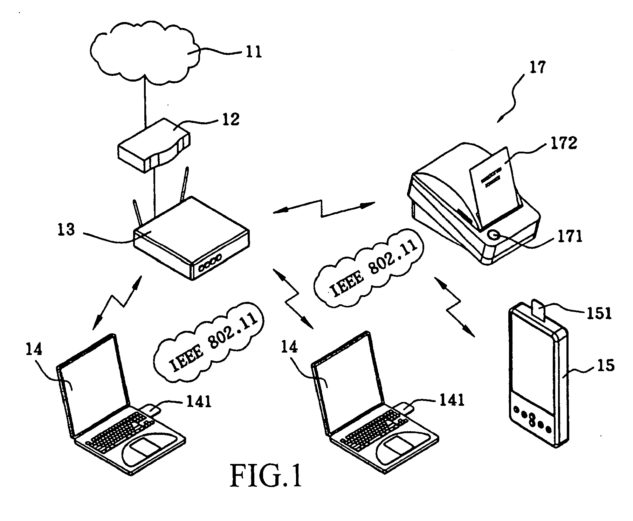

FIG. 1 is a schematic diagram of an automatic account generation system in accordance with the first embodiment of the present invention. The shops and cybercafes, which plan to provide wireless Internet access services, should first apply for lines and accounts to be connected to a WAN (Wide Area Network) outside of their location. In general, the Public Switched Telephone Network (PSTN) 11 is connected via a modem 12 and telephone lines or TV cables. In this way, one can access the Internet to browse all desired web sites in the world or receive, send and read personal electronic mail. We can use an ADSL modem or a cable modem as the modem 12 for broadband communication. An account generator 13 opposite to the PSTN 11 is also connected to the modem 12, and can manage the IP addresses and the accounts of the users. That is, the account generator 13 has a basic function as a gateway, a router, or an access point does, and further has an account management function, generating Internet user access authentication information. When a button 171 on a local printer 17 is depressed, the printer 17 can acquire the Internet user access authentication information from the account generator 13 via wire or wireless transmission and print all this information on an Authentication Card 172. Of course, it is possible to replace the functions of the button 171 with voice control means or a touch panel as an input mechanism.

The printer 17 can be placed at a shop's counter, checkout area or other locations available for easy access. When users want to access the WAN in the shops, they can purchase an Authentication Card 172 from the counter, the Authentication Card 172 is printed with the basic data necessary for a login account, such as username, password, the number of hours to be allocated for wireless Internet access and configuration data. Users only have to enter the data seen on the card onto a confirmation page shown on the screen of a notebook 14 equipped with a WLAN card 141, in order to access the Internet. Wireless data transmission can take place between the notebook 14 and the account generator 13 via standardized telecommunication protocols, such as IEEE 802.11a, IEEE 802.11b and IEEE 802.11g. In addition to the notebook 14, users can also use a PDA (Personal Digital Assistant) 15 plugged with a wireless LAN card 151 or a variety of apparatus capable of accessing the WLAN. From the above-mentioned, a clerk at the counter does not have to master Internet techniques, but only has to inquire the users about the amount of on-line time for Internet access and depress the button 171 on the printer 17 to get the Authentication Card 172 for the users. Once the users obtain the Authentication Card 172, they can take any seat they like and enter their usernames or passwords onto a confirmation page shown on the screen of a wireless access apparatus and enjoy surfing on the Web.

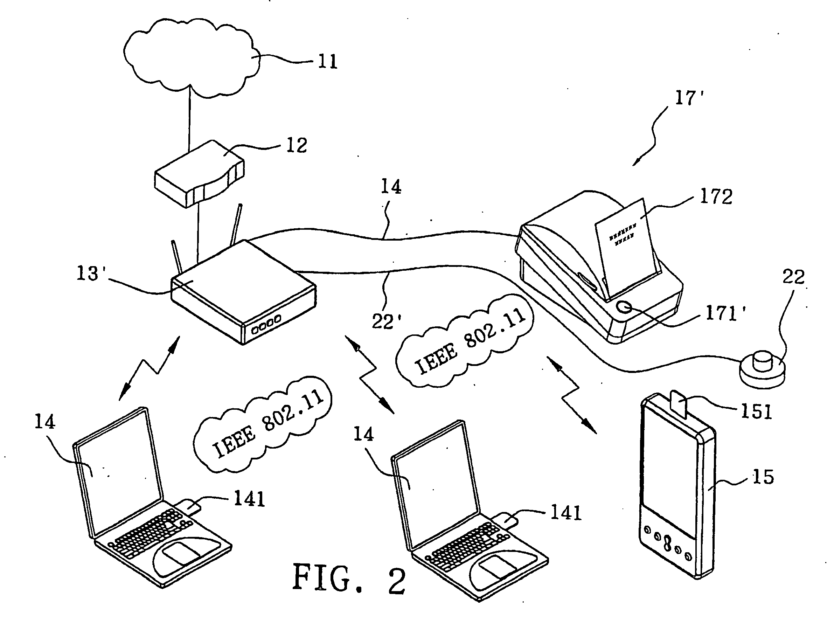

As shown in FIG. 1, the printer 17 acquires the Internet user access authentication information from the account generator 13 via wireless transmission. However, data transfer can also be provided via cables in practical applications. As shown in FIG. 2, a printer 17' is connected to the account generator 13 via a signal line 21. Users can depress the button 171' on the printer 17' to acquire the Authentication Card 172. Additionally, at least one separate button 22 may be installed beside a service clerk to enhance the flexibility of the service clerk's work. The separate button 22 is directly connected to the account generator 13' through a cable 22'. If the separate button 22 is depressed, the printer 17' will print a User Authentication Card 172. Moreover, users can also take the User Authentication card 172 from the place where the printers 17 are on their own.

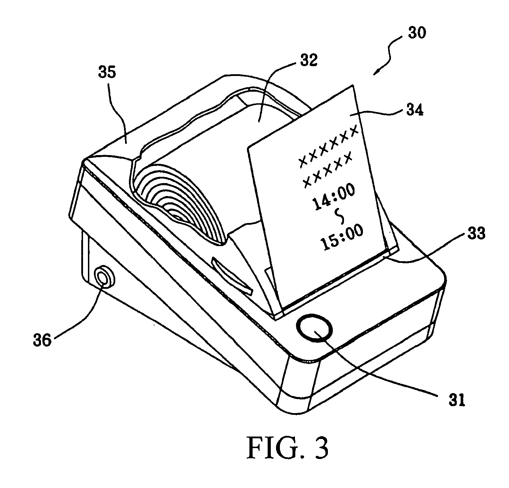

FIG. 3 is a perspective diagram of the printer employed by the automatic account generation system of the present invention. The printer 30 has at least a button 31 available for operations and setting related functions. A paper roll 32 is placed inside a top protecting cover 35 for Internet user access authentication information to be printed thereon. After the information has been printed out, one separate User Authentication Card 34 may be cut from the printout by a cutter 33. A signal transmission port 36 is installed on one side of the printer 30 for transferring the Internet user access authentication information from an account generator, and works by means of the signal line 21 (shown in FIG.2) or wireless transmission means. However, the present invention may also adopt wireless transfer. As mentioned previously, the printer 30 can be connected to the account generator 13 and the account generator 13' via wireless transmission or a signal transmission line. The wireless transmission not only adopts the protocol commonly used in WAN, such as IEEE 802.11a, 802.11b (WiFi) and IEEE 802.11g, but it also employs a variety of techniques like IrDA (Infrared Data Association), radio frequency transmission or Bluetooth transmission. On the other hand, the signal line connects the printer 30 and the account generator by way of an Ethernet port, a serial port, a parallel port, a USB port, or an IEEE 1394 port.

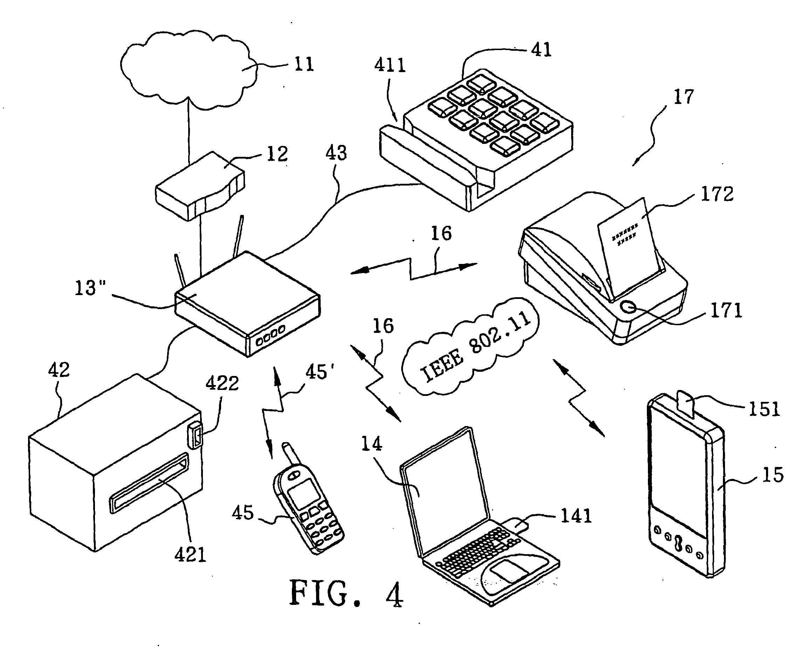

Considering the design for diversified payment functions, the present invention provides both a cash payment mode and a non-cash payment mode and replaces a clerk's manual operation with a self-service operation. FIG. 4 is a schematic diagram of the third embodiment of the hotspot system in accordance with the present invention. It involves separately connecting a card reader 41 and a toll machine 42 to the account generator 13" by means of connection lines 43 and 44. When a user inserts his or her credit card into a swiping slot 411 and completes a corresponding confirmation, the account generator 13" will acquire the information about this payment confirmation and then order the printer 17 to print out the User Authentication Card 172 with reference to the amount of money paid for the wireless Internet access services. Likewise, when users put bank notes into a note slot 421 of the toll machine 42, or put a sufficient amount of coins into a coin-operated slot 422, then the account generator 13" will acquire the confirmation of payment. Finally the users can obtain the User Authentication Card 172 listing the amount of on-line time commensurate with the payment.

Recently, some telecommunications suppliers and automatic machine suppliers propose a kind of technique that enables a user to make payment with a mobile phone. The present invention adopts the same technique for dialing up a mobile phone 45 to pay the bill of wireless Internet services, and then telecommunication systems 45' tell the account generator 13" the confirmation of payment and allowing the User Authentication Card 172 to be printed out.

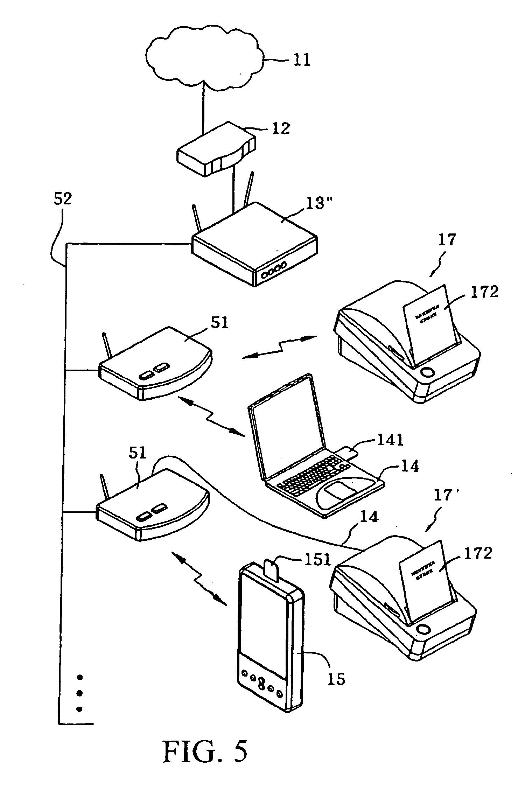

As shown in FIG. 5, the account generator 13" can also be connected to a plurality of access points 51 via the connection line 52. Various access points 51 can be placed at different locations or floors of a building. Each location and floor of the building is equipped with a printer 17 or a printer 17', and thus it is convenient for users to access and acquire the User Authentication Cards 172. Consequently, if users need to extend the amount of on-line time allocated for wireless Internet access, then it is not necessary for them to obtain the cards from the counter of the original entrance again, making the entire operating procedure simpler and easier.

The above-described embodiments of the present invention are intended to be illustrative only. Numerous alternative embodiments may be devised by persons skilled in the art without departing from the scope of the following claims.

## Claims

1. An automatic account generation system **characterized in that** it comprises:
an account generator (13) in connection with an external Wide Area Network (WAN) (11), the account generator (13) having an IP address and exhibiting an account management function;
- an input device (171; 22; 41; 42; 45) connected to the account generator (13) for acquiring Internet user access authentication information after being activated; and
- a printer (17) connected to the account generator (13) for printing out the Internet user access authentication information (172), acquired from the account generator (13) after the input device is operated,
- thereby at least one wireless access apparatus (14, 15) is adapted to connect to the WAN through the account generator by entering the Internet user access authentication information onto a confirmation page shown on a screen of the wireless access apparatus, which account generator has a basic function as a gateway, a router, or an access point does.

2. The automatic account generation system of Claim 1, wherein the account generator (13) includes a gateway, a router or an access point.

3. The automatic account generation system of Claim 1, wherein the input device (171) is mounted on the printer (17).

4. The automatic account generation system of Claim 1, wherein the input device (171; 22; 41; 42; 45) is a button, a touch panel or voice control means.

5. The automatic account generation system of Claim 1, wherein the printer (17) is adapted to receive the Internet user access authentication information from the account generator (13) via a wireless transmission.

6. The automatic account generation system of Claim 5, wherein the wireless transmission adopts a wireless communication protocol of IEEE 802.11a, IEEE 802.11b, IEEE 802.11g, IrDA, radio frequency or Bluetooth.

7. The automatic account generation system of Claim 1, wherein the printer (17) is connected to the account generator (13) by an Ethernet port (36), a series port, a parallel port, a USB port or an IEEE 1394 port for receiving the Internet user access authentication information.

8. The automatic account generation system of Claim 1, wherein the Internet user access authentication information (172) includes a username, a password and allowable on-line time period.

9. The automatic account generation system of Claim 1, 3 or 4, further comprising at least one charging apparatus (41; 42) connected to the account generator (13), wherein the account generator (13) is adapted to instruct the printer (17) to print out the Internet access authentication information (172) after confirming payment information from the charging apparatus (41; 42).

10. The automatic account generation system of Claim 9, wherein the charging apparatus (41; 42) is a card reader or a toll machine.

11. The automatic account generation system of Claim 9, wherein the charging apparatus (45) is a mobile phone.

12. The automatic account generation system (13) of Claim 9, wherein the Internet user access authentication information (172) includes a username, a password and allowable on-line time period.

## Patentansprüche

1. Automatisches Kontoerzeugungssystem, **dadurch gekennzeichnet, dass** es Folgendes aufweist:
einen Kontogenerator (13) in Verbindung mit einem externen Wide Area Network (WAN) (11), wobei der Kontogenerator (13) eine IP-Adresse und eine Kontomanagementfunktion aufweist;
eine Eingabevorrichtung (171; 22; 41; 42; 45), die mit dem Kontogenerator (13) zum Erhalten der Internetbenutzer-Zugangsberechtigungsinformation nach der Aktivierung verbunden ist; und
einen Drucker (17), der mit dem Kontogenerator (13) zum Ausdrucken der Internetbenutzer-Zugangsberechtigungsinformation (172) verbunden ist, die vom Kontogenerator (13), nachdem die Eingabevorrichtung betätigt wurde, erhalten wird,
wodurch zumindest eine drahtlose Zugangsvorrichtung (14, 15) mit dem WAN durch den Kontogenerator durch Eingeben der Internetbenutzer-Zugangsberechtigungsinformation auf einer Bestätigungsseite, die auf einem Bildschirm der drahtlosen Zugangsvorrichtung dargestellt ist, verbunden ist, wobei der Kontogenerator eine Basisfunktion als Gateway, Router oder Access Point aufweist.

2. Automatisches Kontoerzeugungssystem gemäß Anspruch 1, wobei der Kontogenerator (13) ein Gateway, Router oder Access Point umfasst.

3. Automatisches Kontoerzeugungssystem gemäß Anspruch 1, wobei die Eingabevorrichtung (171) auf dem Drucker (17) befestigt ist.

4. Automatisches Kontoerzeugungssystem gemäß Anspruch 1, wobei die Eingabevorrichtung (171; 22; 41; 42; 45), ein Button, Touch Panel oder eine Spracherfassungseinrichtung ist.

5. Automatisches Kontoerzeugungssystem gemäß Anspruch 1, wobei der Drucker (17) die Internetbenutzer-Zugangsberechtigungsinformation vom Kontogenerator (13) über eine drahtlose Übertragung empfängt.

6. Automatisches Kontoerzeugungssystem gemäß Anspruch 5, wobei die drahtlose Übertragung ein drahtloses Kommunikationsprotokoll wie IEEE 802.11a, IEEE802.11b, IEEE 802.11g, IrDA, Funkfrequenz oder Bluetooth aufweist.

7. Automatisches Kontoerzeugungssystem gemäß Anspruch 1, wobei der Drucker (17) mit dem Kontogenerator (13) durch einen Ethernet-Port (36), Serien-Port, Parallel-Port, USB-Port oder IEEE 1394-Port zum Empfangen der Internetbenutzer-Zugangsberechtigungsinformation verbunden ist.

8. Automatisches Kontoerzeugungssystem gemäß Anspruch 1, wobei die Internetbenutzer-Zugangsberechtigungsinformation (172) einen Benutzernamen, Passwort und zulässige On-line-Zeitdauer umfasst.

9. Automatisches Kontoerzeugungssystem gemäß Anspruch 1, 3 oder 4, das ferner zumindest eine Abrechnungsvorrichtung (41; 42) aufweist, die mit dem Kontogenerator (13) verbunden ist, wobei der Kontogenerator eingerichtet ist, den Drucker (17) anzuweisen, die Internetbenutzer-Zugangsberechtigungsinformation (172) nach Bestätigen der Zahlungsinformation von der Abrechnungsvorrichtung (41; 42) auszudrucken.

10. Automatisches Kontoerzeugungssystem gemäß Anspruch 9, wobei die Abrechnungsvorrichtung (41; 42) ein Kartenleser oder eine Benutzungsgebühreneinrichtung ist.

11. Automatisches Kontoerzeugungssystem gemäß Anspruch 9, wobei die Abrechnungsvorrichtung (45) ein Mobiltelefon ist.

12. Automatisches Kontoerzeugungssystem (13) gemäß Anspruch 9, wobei die Internetbenutzer-Zugangsberechtigungsinformation (172) einen Benutzernamen, Passwort und zulässige On-line-Zeitdauer umfasst.

## Revendications

1. Système de génération automatique de comptes, **caractérisé en ce qu'**il comporte :
- un générateur de comptes (13) en liaison avec un réseau étendu (WAN) externe (11), le générateur de comptes (13) présentant une adresse IP et présentant une fonction de gestion de comptes ;
- un dispositif de saisie (171 ; 22 ; 41 ; 42 ; 45) connecté au générateur de comptes (13), en vue d'acquérir des informations d'authentification de l'accès de l'utilisateur à Internet, après avoir été activé ; et
- une imprimante (17) connectée au générateur de comptes (13) en vue d'imprimer les informations d'authentification de l'accès de l'utilisateur à Internet (172), acquises auprès du générateur de comptes (13) suite à l'exploitation du dispositif de saisie ;
- moyennant quoi au moins un dispositif d'accès sans fil (14, 15) est apte à se connecter au réseau WAN via le générateur de comptes en introduisant les informations d'authentification de l'accès de l'utilisateur à Internet dans une page de confirmation affichée sur un écran du dispositif d'accès sans fil, lequel générateur de comptes présente une fonction de base, par exemple une fonction de passerelle, une fonction de routeur ou une fonction de point d'accès.

2. Système de génération automatique de comptes selon la revendication 1, dans lequel le générateur de comptes (13) comporte une passerelle, un routeur ou un point d'accès.

3. Système de génération automatique de comptes selon la revendication 1, dans lequel le dispositif de saisie (171) est monté sur l'imprimante (17).

4. Système de génération automatique de comptes selon la revendication 1, dans lequel le dispositif de saisie (171 ; 22 ; 41 ; 42 ; 45) est un bouton, un écran tactile ou un moyen de commande vocale.

5. Système de génération automatique de comptes selon la revendication 1, dans lequel l'imprimante (17) est apte à recevoir les informations d'authentification de l'accès de l'utilisateur à Internet en provenance du générateur de comptes (13) via une transmission sans fil.

6. Système de génération automatique de comptes selon la revendication 5, dans lequel la transmission sans fil adopte un protocole de communication sans fil tel que les normes IEEE 802.11a, IEEE 802.11b, IEEE 802.11g, IrDA, un protocole fréquence radio ou la technologie Bluetooth.

7. Système de génération automatique de comptes selon la revendication 1, dans lequel l'imprimante (17) est connectée au générateur de comptes (13) par un port Ethernet (36), un port série, un port parallèle, un port USB ou un port IEEE 1394, en vue de recevoir les informations d'authentification de l'accès de l'utilisateur à Internet.

8. Système de génération automatique de comptes selon la revendication 1, dans lequel les informations d'authentification de l'accès de l'utilisateur à Internet (172) comportent un nom d'utilisateur, un mot de passe et une durée autorisée en ligne.

9. Système de génération automatique de comptes selon la revendication 1; 3 ou 4, comprenant en outre au moins un dispositif de facturation (41 ; 42) connecté au générateur de comptes (13), dans lequel le générateur de comptes (13) est apte à donner l'instruction à l'imprimante (17) d'imprimer les informations d'authentification de l'accès à Internet (172) suite à des informations de confirmation de paiement en provenance du dispositif de facturation (41 ; 42).

10. Système de génération automatique de comptes selon la revendication 9, dans lequel le dispositif de facturation (41 ; 42) est un lecteur de carte ou un automate de paiement.

11. Système de génération automatique de comptes selon la revendication 9, dans lequel le dispositif de facturation (45) est un téléphone mobile.

12. Système de génération automatique de comptes (13) selon la revendication 9, dans lequel les informations d'authentification de l'accès de l'utilisateur à Internet (172) comportent un non d'utilisateur, un mot de passe et une durée autorisée en ligne.
